# EUROPÄISCHE PATENTANMELDUNG

(11) **EP 2 949 288 A1**
(43) Veröffentlichungstag der Anmeldung: **02.12.2015**
(21) Anmeldenummer: 14176817.6
(22) Anmeldetag: 11.07.2014
(51) Int. Cl.: A61C 8/00, A61C 19/06

(54) **Behandlungsabutment und Verfahren zu dessen Herstellung**

(30) Priorität: 27.05.2014 EP 14170128
(71) Anmelder: Dentsply Implants Manufacturing GmbH, 68229 Mannheim (DE)
(72) Erfinder: Biehl, Volker, 66539 Neunkirchen (DE); Huwig, Alexander, 69126 Heidelberg (DE)
(74) Vertreter: Walkenhorst, Andreas

(57) **Zusammenfassung**

Es soll ein Behandlungsabutment (20, 20') zur Verwendung mit einem in den Kieferknochen eines Patienten eingebrachten Implantat-Teil (2) eines Dental-Implantatsystems (1) und durch dieses eine Möglichkeit für geeignete Therapiemaßnahmen bereitgestellt werden, mit denen insbesondere Entzündungserscheinungen im Umgebungsbereich der Insertionsstelle eines Dentalimplantats (1), gegebenenfalls aber auch andere therapiebedürftige Situationen im Mundraum eines Patienten auf besonders einfache und wirkungsvolle Weise behandelt werden können. Dazu weist das Behandlungsabutment (20, 20') erfindungsgemäß einen Grundkörper (30) auf, der zur mechanischen Verbindung mit korrespondierenden Verbindungselementen des Implantat-Teils (2) ein an diese angepasstes Verbindungssystem und ein Depot (34) für eine einen zu verabreichenden Wirkstoff enthaltende Substanz umfasst, wobei eine das Depot (34) umschließende Außenwand (36) des Grundkörpers (30) in einem Diffusionsbereich (38) porös ausgeführt ist.

## Beschreibung

Die Erfindung betrifft ein Behandlungsabutment, insbesondere zur Verwendung mit einem in den Kieferknochen eines Patienten eingebrachten Implantat-Teil eines Dental-Implan-tatsystems. Sie bezieht sich weiter auf ein Behandlungssystem mit einer Mehrzahl derartiger Behandlungsabutments sowie auf ein Verfahren zur Herstellung eines derartigen Behandlungsabutments.

Zum Ausgleich des Verlusts eines Zahnes können im Rahmen der rekonstruktiven Therapie Dentalimplantate zum Einsatz kommen. Sie werden üblicherweise anstelle eines extrahierten oder ausgefallenen Zahnes in den Kieferknochen eingesetzt, um dort nach einer Einheilphase von etwa vier bis zwölf Wochen ein als Zahnersatz dienendes prothetisches Teil oder eine Krone zu halten. Dazu ist ein derartiges Dentalimplantat üblicherweise als geeignet geformter Metallkörper ausgebildet, der durch Einschrauben an der vorgesehenen Stelle in den Kieferknochen eingesetzt wird. Das Dentalimplantat weist dabei in der Regel am apikalen Ende ein zumeist selbstschneidendes Schraubengewinde auf, mit welchem das Dentalimplantat in das entsprechend präparierte Implantatbett eingesetzt wird.

Um eine erleichterte Einbringung in den Patientenmund und insbesondere eine besonders weitgehende Vorbereitung der eigentlichen Prothese bei der Anbringung an das Implantat bereits im Vorfeld der Patientenbehandlung, beispielsweise in einem zahntechnischen Labor, zu ermöglichen, können Dental-Implantatsysteme mehrteilig ausgeführt sein. Insbesondere kann dabei ein grundsätzlich zweiteiliger Aufbau vorgesehen sein, wobei das Dental-Implantatsystem ein erstes, zur Einbringung in den Kieferknochen vorgesehenes, auch als eigentliches Implantat oder Pfostenteil bezeichnetes Implantat-Teil und zusätzlich zu diesem ein zugeordnetes zweites, auch als Aufbauteil oder Abutment bezeichnetes zweites Implantat-Teil umfasst, an das wiederum das als Prothese oder dergleichen vorgesehene Zahnersatzstück anbringbar ist. Das erste Implantat-Teil oder Pfostenteil ist an seiner Außenseite üblicherweise mit einem Gewinde versehen, welches als selbstschneidendes oder auch als nicht selbstschneidendes Gewinde ausgeführt sein kann. Das Pfostenteil wird üblicherweise in einem entsprechend aufbereiteten Implantatbett des Kieferknochens verankert. Die Konstruktion des im Außenbereich des Dentalimplantats vorgesehenen Gewindes ist dabei üblicherweise für eine hohe Primärstabilität der Anordnung und eine gleichmäßige Weiterleitung der bei der Kaubelastung des Dentalimplantats auftretenden Kräfte in den Kieferknochen ausgelegt. Ein derartiges, grundsätzlich zweiteilig ausgeführtes Dentalimplantat ist beispielsweise aus der DE 10 2005 005 402 A1 bekannt.

Das Pfostenteil und ebenso das Aufbauteil oder Abutment bestehen üblicherweise aus Metall oder einer Keramik, und zwar insbesondere aus Titan, Zirkon, einer Titanlegierung, Zirkonlegierung, einer titanhaltigen Legierung, einer zirkonhaltigen Legierung, einer Zirkonoxid-Aluminiumoxid-Keramik oder einer Keramik, die entweder Zirkonoxid oder Aluminiumoxid beinhaltet oder mindestens eine der Keramiken als Hauptbestandteil aufweist. Darüber hinaus können Keramiken eingesetzt werden, die auf Silizium- oder Siliziumoxidbasis aufgebaut sind und z. B. Stickstoff, Wasserstoff, Calcium, Natrium, Kohlenstoff oder Wolfram beinhalten.

Das Aufbauteil oder Abutment, das üblicherweise an seinem oberen Bereich mit einer Krone, einer anderen prothetischen Versorgung oder dergleichen in an sich bekannter Weise ausgestattet wird, ist üblicherweise über eine geeignet gewählte Verbindungsschraube mit dem Pfostenteil verschraubt. Bei der Einbringung wird dabei das Gewinde der Verbindungsschraube in ein zugeordnetes Innengewinde im Pfostenteil eingeschraubt. Der Schraubenkopf der Verbindungsschraube presst dabei beim Einschrauben über eine Stirnsenkung des Aufbauteils dieses auf das Pfostenteil. Das Aufbauteil kann aber auch in das Pfostenteil eingepresst werden und lediglich über eine Verklemmung fixiert werden, oder durch eine Zementierung/Verklebung fixiert werden.

Angesichts der mittlerweile vergleichsweise hohen Anzahl der inserierten Implantate im menschlichen Körper, insbesondere im Dentalbereich, sowie deren verhältnismäßig langer Nutzungsdauer wurde ein stetiger Anstieg im Auftreten von biofilmassoziierten Entzündungszuständen des periimplantären Gewebes festgestellt. An der von Gewebe und Gewebeflüssigkeit umschlossenen festen Oberfläche des Implantats bildet sich unter Mitwirkung von Mikroorganismen ein Biofilm, der von Bakterien besiedelt wird, der letztlich zu chronischen und wiederkehrenden Infektionen führen kann. Dieses Erkrankungsbild wird als Periimplantitis bezeichnet. Insbesondere im dentalen Bereich ist ähnlich wie bei der Parodontitis eine Kombination aus vernachlässigter Mundhygiene, Anhaftung von Biofilmen an der üblicherweise mikrorauhen Oberfläche des Pfostenteils und weiterer Kofaktoren ursächlich für das Vollbild der Periimplantitis, welche sich durch eine zunehmende Belastung und Zerstörung des Hart- und Weichgewebes auszeichnet.

Sowohl behandelt als auch unbehandelt kann ein Voranschreiten der periimplantären Entzündung zum Verlust des Implantates und zur Kompromittierung des Implantatlagers führen. Es ist daher wünschenswert, entweder prophylaktisch oder möglichst frühzeitig nach Feststellung einer derartigen Entzündung geeignete Gegenmaßnahmen in Form von ersten Therapieschritten einzuleiten. Diese können von einer Optimierung der Mundhygiene bis hin zu einer chirurgischen Intervention, d. h. einer Entnahme des befallenen Implantats und Neueinsetzen eines Austauschimplantats, reichen. Insbesondere letztgenannte Maßnahme ist jedoch sehr belastend für das Gewebe insgesamt und geht oftmals mit massivem Gewebeabbau in der Umgebung der Insertionsstelle einher. Alternative wirksame Maßnahmen zur Bekämpfung existierender oder sich anbahnender Periimplantitis sind daher äußerst wünschenswert.

Des Weiteren sind noch eine Vielzahl weiterer behandlungsbedürftiger Situationen den Mundraum eines Patienten denkbar, in denen die Einleitung gezielter Behandlungsmaßnahmen wünschenswert wäre.

Der Erfindung liegt daher die Aufgabe zugrunde, eine Möglichkeit für weitere Therapiemaßnahmen bereitzustellen, mit denen insbesondere Entzündungserscheinungen im Umgebungsbereich der Insertionsstelle eines Dentalimplantats, gegebenenfalls aber auch andere therapiebedürftige Situationen im Mundraum des Patienten auf besonders einfache und wirkungsvolle Weise behandelt werden können.

Diese Aufgabe wird erfindungsgemäß durch ein Behandlungsabutment zur Verwendung mit einem in den Kieferknochen eines Patienten eingebrachten Implantat-Teil eines Dental-Implantatsystems gelöst, wobei das Behandlungsabutment einen Grundkörper aufweist, der zur mechanischen Verbindung mit korrespondierenden Verbindungselementen des Implantat-Teils ein an diese angepasstes Verbindungssystem und ein Depot für eine einen zu verabreichenden Wirkstoff enthaltende Substanz aufweist, wobei eine dem Depot zugeordnete Außenwand des Grundkörpers in einem Diffusionsbereich porös ausgeführt ist. Die Außenwand ist dabei im Diffusionsbereich insbesondere derart porös ausgeführt, dass das innerhalb des Grundkörpers positionierte Depot medien- oder strömungsseitig über den Diffusionsbereich mit der äußeren Umgebung des Grundkörpers verbunden ist.

Die Erfindung geht dabei von der Überlegung aus, dass für wirkungsvolle und effiziente therapeutische Maßnahmen im Mundbereich des Patienten, möglichst unter Vermeidung chirurgischer Eingriffe, eine gezielte und lokalisierte Verabreichung von Medikamenten oder anderen Wirkstoffen ermöglicht sein sollte. Um dies mit vergleichsweise einfachen Mitteln bei hoher Präzision und weitgehender Flexibilität zu erreichen, sollte ein Depot für das Medikament oder den Wirkstoff bereitgestellt werden, mit dem auch über einen längeren Zeitraum hinweg eine gezielte und dosierte Abgabe des Wirkstoffes, ggf. zur Medikation des betroffenen Gewebebereichs oder auch zur kontrollierten Abgabe eines delokalisiert oder systemisch wirkenden Wirkstoffs, möglich ist. Dies ist auf besonders einfache Weise mit geeigneter örtlicher Fixierung im Mundbereich des Patienten erreichbar, indem auf dort bereits vorhandene Ankerpunkte zur Anbringung des Depots zurückgegriffen wird. Hierzu ist vorgesehen, das für die Bereitstellung und Vorhaltung des Medikaments oder Wirkstoffes vorgesehene Depot in ein Behandlungsabutment zu integrieren, das anstelle eines ansonsten vorgesehenen "eigentlichen" Abutments in Kombination mit dem Pfostenteil eines inserierten Dentalimplantats genutzt werden kann.

Zu diesem Zweck umfasst das Behandlungsabutment geeignet ausgestaltete Verbindungsmittel, die eine Befestigung am in den Kieferknochen inserierten Pfostenteil unmittelbar, d. h. direkt, oder auch mittelbar, d. h. unter ggf. vorgesehener Zwischenschaltung eines Verbindungs- oder Zwischenstücks, ermöglichen. Beispielsweise kann das Behandlungsabutment, falls das Dental-Implantatsystem eine Verbindung von Pfostenteil und Abutment mittels einer Verbindungsschraube vorsieht, einen daran angepassten geeigneten Schraubenkanal für die Aufnahme der Verbindungsschraube aufweisen. Alternativ kann der Grundkörper auch mit einem in seinen Gewindeparametern an das Innengewinde des Pfostenteils angepassten Außengewinde versehen sein, so dass das Behandlungsabutment in das Innengewinde des Pfostenteils eingeschraubt werden kann.

Um die gezielte und dosierte Abgabe des im Depot des Behandlungsabutment vorgehaltenen Medikaments oder Wirkstoffs an die Umgebung, also in den Patientenmund, zu ermöglichen, ist der das Depot enthaltende Teil des Grundkörpers im Bereich seiner das Depot umschließenden Außenwände in geeignet gewählten Bereichen porös ausgeführt, so dass auf Grund der gewählten Porosität ein Stoffaustausch zwischen dem Depot und dem umgebenden Mundbereich in der gewünschten Intensität und an den vorgesehenen Stellen ermöglicht ist. Der somit über die Porosität bereitgestellte Diffusionsbereich in der Außenwand des Grundkörpers ist dabei vorzugsweise im Hinblick auf den vorgesehenen Einsatzzweck geeignet dimensioniert und positioniert. Insbesondere kann die gesamte das Depot umgebende Außenwand des Grundkörpers derartig porös ausgeführt sein, oder es kann lediglich ein geeignet gewählter Teilbereich, beispielsweise eine umlaufende Ringzone oder auch ein sonstiges Oberflächensegment, zur Bildung des Diffusionsbereichs gewählt sein.

Das Behandlungsabutment ist vorteilhafterweise in seinem Diffusionsbereich hinsichtlich seiner Systemparameter gezielt an den vorgesehenen Einsatzzweck, also insbesondere an die Art und Darreichungsform des zu verabreichenden Medikaments oder Wirkstoffs unter Berücksichtigung der gewünschten Dosierung, angepasst ausgeführt. Für das Behandlungskonzept wird bevorzugt auf gezielt an den Behandlungsbedarf angepasste Wirkstoffe zurückgegriffen. Vorteilhafterweise können dabei als Wirkstoff beliebige, im Hinblick auf den gewünschten Behandlungszweck geeignet gewählte Kombinationen aus den Grundkomponenten Metalle (Kupfer, Silber oder dergleichen, bevorzugt verwendet zur Behandlung von Infektionen), Pharmastoffe (vorzugsweise "Non-Steroide Anti-In-flammatory Drugs", NSAIDs, Antibiotika oder dergleichen), Peptide (bevorzugt mit antimikrobieller, antiinflammatorischer und/oder regenerationsfördernder Wirkung), Proteine (bevorzugte Wirkung analog zu Peptiden) und synthetische Wirkstoffe (bevorzugte Wirkung analog Peptide) vorgesehen sein.

In besonders vorteilhafter Ausgestaltung sind für das Behandlungsabutment die Porosität und/oder die Porengröße, insbesondere unter Berücksichtigung der Wanddicke der das Depot umgebenden Außenwand und/oder unter Berücksichtigung der Partikelgröße, Viskosität oder anderen Stoffeigenschaften der zu verabreichenden Substanz oder des Wirkstoffs, geeignet gewählt. Vorteilhafterweise weist dazu die Außenwand des Grundkörpers im Diffusionsbereich eine Porosität auf, die derart ausgelegt ist, dass der Diffusionsbereich eine Diffusionsbarriere darstellt und im Sinne der Fick'schen Gesetze zu einer signifikanten Verminderung der Diffusionsstromdichte bzw. des Materialflusses führt. Typischerweise weisen aktive Wirkstoffe mit einer antimikrobiellen, antiinflammatorischen oder regenerativen Wirkung einen hydrodynamischen Radius von bis zu 10 nm auf. Demnach sollte der Grundkörper eine durchgehende bzw. interkonnektierende Porengrößenverteilung von mindestens 10 nm aufweisen. Eine signifikante Diffusionsbarriere ist bei einer Porosität noch gegeben, bei der die Porengröße im Mittel um einen Faktor 10 bis Faktor 100 größer ist als der hydrodynamische Radius, d. h. vorliegend bevorzugt 100 nm bis 1 µm. Hierbei ist zu beachten, dass die Dicke der Diffusionsbarriere ebenfalls von Bedeutung ist, aber aufgrund der vergleichsweise engen Platzverhältnisse in der Mundhöhle und somit des Bauteils zweckmäßigerweise in vergleichsweise engen Grenzen von 0,2 bis 2 mm gewählt ist.

Die Diffusion des aktiven Wirkstoffs wird durch die Porosität des Behandlungsabutments gesteuert. Analog zur Gelpermeationschromatographie diffundieren Wirkstoffe mit kleinen hydrodynamischen Radii langsamer als solche mit großen Radii, da die kleineren Moleküle auch in kleinere Poren eindringen können, ihnen damit mehr Volumen zum Diffundieren zur Verfügung steht und sie somit mehr Zeit benötigen, um die Diffusionsbarriere, d. h. die Abutmentwand, zu passieren.

Die Diffusion kann somit durch die folgenden Parameter eingestellt werden:
1. Wirkstoff mit bestimmtem hydrodynamischen Radius
2. falls vorhanden: Lösungsmittel bzw. Träger des aktiven Wirkstoffs
3. Wandstärke des Abutments
4. Wechselwirkung des aktiven Wirkstoffs mit dem Abutmentmaterial
5. Porosität

Von den hier genannten Faktoren weist die Porosität den größten Einfluss sowie den größten Toleranzbereich auf. Für die Porengröße stellt die Höhe des porösen Bereiches den oberen Grenzwert dar, d. h. 3 bis 5 mm. Bevorzugt liegt die Porosität bei 10 µm und besonders bevorzugt im Bereich 0,01 bis 1 µm mit einem Optimalwert von 0,2 µm.

Als Basismaterial für den Grundkörper des Behandlungsabutments ist in besonders vorteilhafter Ausgestaltung ein auch für die eigentlichen Dentalimplantate und ihre Bestandteile gängiges, insbesondere körperverträgliches oder biokompatibles, Material gewählt. Vorzugsweise besteht dabei der Grundkörper des Behandlungsabutments aus einem geeignet gewählten Metall oder einer geeignet gewählten Keramik, und zwar insbesondere aus Titan, Zirkon, einer Titanlegierung, besonders bevorzugt Ti6AI4V, einer Zirkonlegierung, einer titanhaltigen Legierung, einer zirkonhaltigen Legierung, einer Zirkonoxid-Alu-miniumoxid-Keramik oder einer Keramik, die entweder Zirkonoxid oder Aluminiumoxid beinhaltet oder mindestens eine der Keramiken als Hauptbestandteil aufweist. Alternativ ist auch der Einsatz von Siliziumkarbid oder anderen geeignet porösen Materialien möglich. In weiterer alternativer vorteilhafter Ausgestaltung kann der Speicherkörper und/oder die Außenwand des Grundkörpers im Diffusionsbereich auch aus einem anderen porösen Material der Gruppe der Metalle, der Gruppe der Keramiken, der Gruppe der Kunststoffe, vorzugsweise PEEK, oder der Gruppe der Textilien hergestellt sein, wobei die Biokompatibilität sichergestellt sein sollte.

Gerade bei der Verwendung eines keramischen Basismaterials können nämlich Porositäten im Bereich mit den bevorzugt vorgesehenen Porengrößen erzeugt werden, wobei die porösen Strukturen dabei in der Regel derart miteinander vernetzt oder verbunden sind, dass Gas oder Flüssigkeiten mit vergleichsweise geringem Druckverlust hindurchtreten können. In vorteilhafter Weiterbildung weist die Außenwand des Grundkörpers im Diffusionsbereich dabei eine gerichtete Porenform auf. Derartige gerichtete Poren können insbesondere bei der Verwendung eines keramischen Basismaterials durch geeignete Extrusionsverfahren erzeugt werden. Die mechanischen Eigenschaften einer derartigen porösen Keramik mit gerichteter Porenform sind dabei im Vergleich zu herkömmlichen porösen Materialien deutlich überlegen, und bei geeigneter Ausrichtung der Porenform (bevorzugt in der vorgesehenen Durchtrittsrichtung der zu verabreichenden Substanz im Diffusionsbereich) können kanalartige Mikro- oder Nanostrukturen erzeugt werden, die die angestrebte Diffusion der zu verabreichenden Substanz noch weiter begünstigen.

In besonders bevorzugter Ausgestaltung weist die Außenwand des Grundkörpers im Diffusionsbereich von innen nach außen gesehen eine Mehrzahl von aufeinanderfolgenden Schichten jeweils unterschiedlicher Porosität und/oder unterschiedlicher Porengröße auf. Durch eine derartige Kombination derartiger Schichten miteinander können unterschiedliche Funktionsschichten bereitgestellt werden, die an jeweils individualisierte Vorgaben oder Funktionen angepasst sind. Beispielsweise könnte eine Funktionsschicht mit vergleichsweise geringer Porengröße vorgesehen sein, die die Größe der hindurchtretenden Partikel begrenzt und somit die Funktionalität einer Bestimmungsschicht erfüllt. Diese erste Funktionsschicht könnte mit einer zweiten Funktionsschicht mit vergleichsweise größerer Porengröße kombiniert sein, die in der Art einer Stützschicht zur mechanischen Stabilität des Gesamtsystems beiträgt, ohne den Durchströmungswiderstand übermäßig zu erhöhen.

In einer besonders bevorzugten Ausgestaltung des Behandlungsabutments umfasst das Depot einen porös ausgeführten Speicherkörper für die den Wirkstoff enthaltende Substanz. Der porös ausgeführte Speicherkörper kann dabei - der Wirkungsweise eines Schwamms vergleichbar - zur vorübergehenden Einlagerung der den Wirkstoff enthaltenden Substanz dienen. Der Speicherkörper kann sich dabei räumlich in der Art eines Gesamtkörpers bis hin zur Außenwand des Grundkörpers erstrecken und somit den den Diffusionsbereich bildenden Teil der Außenwand des Grundkörpers direkt mit umfassen; alternativ kann der Speicherkörper aber auch von einer abgrenzbaren Außenwand in der Art einer Umhüllung umgeben sein.

Eine besonders hohe Flexibilität bei der Einlagerung und späteren Abgabe der Wirkstoffe und Medikamente und damit eine Eignung für eine besondere Vielfalt von therapeutischen Zwecken ist erreichbar, indem der Speicherkörper in besonderes vorteilhafter Ausgestaltung eine Mehrzahl von Speichersegmenten umfasst. Diese können räumlich abgegrenzt voneinander angeordnet und/oder mit im Vergleich zueinander unterschiedlichen Porositäten ausgestaltet sein. Durch derartige Segmente können innerhalb des Depots beispielsweise unterschiedliche Funktionalitäten separat voneinander abgebildet sein, beispielsweise durch Bereitstellung einer Aufnahmezone (vorgesehen zum Einbringen oder Einlagern des Wirkstoffs), einer Speicherzone (vorgesehen als eigentlicher Speicher) und/oder einer Abgabezone (vorgesehen zur Abgabe des Wirkstoffs an die Umgebung). Durch geeignete räumliche Positionierung dieser Zonen kann beispielsweise die Aufnahmezone in einem vergleichsweise leicht zugänglichen Raumbereich positioniert sein, so dass ein Nachfüllen des Wirkstoffs besonders erleichtert wird, wohingegen die Abgabezone in unmittelbarer Nachbarschaft des behandlungsbedürftigen Bereichs in der Mundhöhle des Patienten angeordnet sein kann, so dass die Zuleitung des Wirkstoffs in den vorgesehenen Behandlungsbereich besonders erleichtert ist.

Um diese Auslegung noch weiter zu begünstigen, ist in weiterer oder alternativer vorteilhafter Ausgestaltung der Speicherkörper und/oder die Außenwand des Grundkörpers im Diffusionsbereich axial von apikal nach distal gesehen in eine Mehrzahl von aufeinanderfolgenden Schichten jeweils unterschiedlicher Porosität unterteilt, wobei in zweckmäßiger Weiterbildung die Porosität und die sonstigen Eigenschaften der jeweiligen Schicht im Hinblick auf die ihr zugeordnete Funktionalität (Aufnahme, Speicherung, Abgabe oder dergleichen) geeignet gewählt sind.

In einer weiteren besonders bevorzugten Ausgestaltung des Behandlungsabutments ist das Depot in der Art eines für die vorübergehende Aufnahme der den Wirkstoff enthaltende Substanz ausgelegten Behältnisses ausgeführt. Dazu umfasst das Depot vorteilhafterweise eine mit einem Deckelelement verschließbare Depotkammer. In besonders vorteilhafter Ausgestaltung weist das Behandlungsabutment zum Verschließen der Depotkammer dabei ein Deckelelement auf, das in einem Applizierungsbereich vollständig aus einem vergleichsweise weichen Material, insbesondere einem Kunststoff, bevorzugt Viton, besteht. Dieses Material sollte derart geeignet gewählt sein, dass das Deckelelement im Applizierungsbereich zum Durchstoßen mit einer Injektionsnadel, einer Kanüle oder dergleichen geeignet ist. Besonders bevorzugt ist dabei im Applizierungsbereich ein Material mit einer ShoreD-Härte im Bereich von 10 bis 80, bevorzugt 25 bis 50, und/oder einer Reißfestigkeit von mehr als 10 N/mm² vorgesehen. Durch diese Ausgestaltung ist erreicht, dass auch bei eingesetztem Behandlungsabutment und ohne Erfordernis eines vollständigen Austauschs eine Nachbefüllung der Depotkammer mit der zu verabreichenden Substanz ermöglicht ist.

Vorteilhafterweise weist die Depotkammer des Behandlungsabutments ein freies oder lichtes Innenvolumen von 5 bis 50 µl, vorzugsweise von etwa 15 µl, auf. Damit ist sichergestellt, dass auch im Hinblick auf die durch die dentale Umgebung bestimmten Größen- und Dimensionierungsverhältnisse bei der Ausgestaltung des Abutments eine auch für eine vergleichsweise längere Medikation ausreichende Menge an zu verabreichender Substanz in die Depotkammer eingebracht werden kann, ohne dass zu häufig eine Nachbefüllung erforderlich wäre.

Durch die grundsätzliche Auslegung des Behandlungsabutments, insbesondere die Bereitstellung des Depots für die den zu verabreichenden Wirkstoff enthaltende Substanz in dem Grundkörper, werden in sämtlichen genannten Ansätzen verschiedene Nutzungen und Konzepte bei der Verabreichung von Wirkstoffen ermöglicht. Dabei ist vorteilhafterweise die Charakteristik der Medikamenten- oder Wirkstoffabgabe durch geeignete Dimensionierung und Auslegung des Behandlungsabutments (z. B. Wahl der Depot-Volu-mina, Porengrößen, Positionen der einzelnen Segmente im Grundkörper) einstellbar. Insbesondere kann das Behandlungsabutment auf diese Weise ausgelegt sein für eine Medikamenten- oder Wirkstoffabgabe durch:
- "Burst", d. h. Abgabe vergleichsweise großer Wirkstoffmengen innerhalb eines vergleichsweise kurzen Zeitraums
- "Retard", d. h. Erstreckung der Abgabe des Wirkstoffs in kleinen Abgaberaten über einen vergleichsweise langen Zeitraum
- "Delayed", d. h. Beginn der Wirkstoffabgabe nach einstellbarer, beispielsweise diffusionsbedingter Wartezeit, ggf. ausgelöst durch ein zugeordnetes Ereignis
- "Periodic", d. h. in regelmäßig wiederkehrenden Zeitintervallen
- "on demand", d. h. ausgelöst durch situationsbedingte Kriterien
- "by contact", d. h. ausgelöst durch beispielsweise ein Enzym eines ausgewählten Mikroorganismus

Alternativ oder zusätzlich kann auch eine indirekte Wirkstoffabgabe vorgesehen sein, bei der die Bevorratung im Depot in Form eines "indirekten Wirkstoffes" erfolgt. Dieser Wirkstoff lässt bei Kontakt mit anderen Stoffen den eigentlich vorgesehenen und erwünschten Wirkstoff entstehen, beispielsweise in der Art eines Reaktionspartners oder Katalysators. Auf diese Weise ist eine besonders günstige Bevorratung im Depot darstellbar, wobei sämtliche der oben genannten Charakteristiken vorgesehen sein können. Bevorzugt ist dabei allerdings die "on demand"-Abgabe.

Als besonders vorteilhaft ist anzusehen, dass das Behandlungsabutment die den Wirkstoff enthaltende Substanz in Form eines so genannten "Release Device", insbesondere als "Controlled Release Device", abgeben kann.

Diese Charakteristiken der Wirkstoffabgabe sind mit allen Varianten des Behandlungsabutments, insbesondere mit der Ausführung mit porösem Speicherkörper einerseits ebenso wie mit der Ausführung mit Depotkammer andererseits, erreichbar. Um dabei aber das Einsatzspektrum und die Vielfalt der möglichen Abgabekonzepte noch weiter zu erhöhen, ist in vorteilhafter Weiterbildung das für die Einspeicherung des Wirkstoffs vorgesehene Depot gezielt für eine erhöhte mögliche Speicherdauer, also eine besonders lang gehaltene Einlagerungszeit des Wirkstoffs, ausgelegt. Um dies zu ermöglichen oder zu begünstigen, ist das Depot, also der poröse Speicherkörper und/oder die Depotkammer, an seinen mit der den Wirkstoff enthaltenden Substanz in Kontakt tretenden inneren Oberflächen vorteilhafterweise mit einer passivierenden Beschichtung versehen. Durch eine derartige Passivierungsschicht wird erreicht, dass eine chemische oder sonstige Reaktion der Bestandteile der Substanz mit dem Wandmaterial unterbunden oder zumindest verlangsamt wird, so dass eine entsprechend erhöhte Lagerfähigkeit der im Depot befindlichen Substanz erreicht ist.

In besonders vorteilhafter Ausgestaltung ist das Behandlungsabutment Teil eines Behandlungssystems zur oralen Applikation von zu verabreichenden Wirkstoff enthaltenden Substanzen, bei dem eine Mehrzahl von einem gemeinsamen, in den Kieferknochen eines Patienten inserierten Implantat-Teils eines Dental-Implantatsystems zugeordneten derartigen Behandlungsabutments vorgesehen sind, die sich hinsichtlich der Positionierung ihrer Depots, der Porosität ihrer Außenwand im Diffusionsbereich und/oder der Porengröße ihrer Außenwand im Diffusionsbereich voneinander unterscheiden. Unter "gemeinsam zugeordnet" ist hierbei insbesondere zu verstehen, dass die genannten, in ihrer Gesamtheit das Behandlungssystems bildenden Behandlungsabutments mit identischen oder gleichartigen Verbindungselementen ausgerüstet sind, so dass sie alle mit demselben Pfostenteil nutzbar und gegeneinander austauschbar sind. Durch eine derartige Kombination von mehreren gegeneinander austauschbaren Behandlungsabutments mit unterschiedlich gewählten individuellen Parametern ist eine im Verlauf einer z. B. über einen längeren Verabreichungszeitraum angelegten therapeutischen Behandlung anzupassende oder variierende Medikation ermöglicht. Dazu kann beispielsweise (durch jeweils geeignete Positionierung des Diffusionsbereichs bzw. Änderung von Porosität und/oder Porengröße) die Dosierungsrate und/oder der Ort der Medikamentenzuführung entsprechend dem Verlauf der Therapie verändert und angepasst werden, indem ein Austausch des Behandlungsabutments vorgenommen wird.

Die Herstellung eines Behandlungsabutments der vorgenannten Art, insofern sein Grundkörper aus metallischem Basismaterial, insbesondere auf Titan-Basis, gefertigt ist, könnte grundsätzlich unter Rückgriff auf herkömmliche pulvermetallurgische Verfahren erfolgen. Hierbei wird ein Ausgangs-Metallpulver mit einer geeignet gewählten Korngröße oder Korngrößen-Verteilung geeignet verdichtet (uniaxial oder isostatisch). Der hierdurch erhältliche so genannte Grünling kann als Ausgangskörper für nachfolgende Bearbeitungsschritte dienen oder - abhängig von der im endgültigen Produkt gewünschten Präzision - bereits annähernd in die eigentlich gewünschte Form gepresst werden. Auf Grund der Neigung von Titan und Titan-Legierungen zum Kaltverschweißen ist hierbei bereits eine Festigkeit des Materials erreichbar, die für einige Anwendungen oder insbesondere für eine behutsame mechanische Nachbearbeitung ausreichend sein kann.

Nach dem Verdichten wird der Grünling über eine geeignet gewählte Zeitspanne von beispielsweise einigen Minuten oder Stunden einem Sinterprozess mit einer erhöhten Behandlungstemperatur von beispielsweise 800 °C bis 1000 °C im Vakuum oder unter Schutzgas-Atmosphäre ausgesetzt. Durch die geeignete Wahl der Prozessparameter in diesem pulvermetallurgischen Prozess können die wesentlichen Eigenschaften des erhaltenen Produkts, insbesondere Porosität und (mittlere) Porengröße, vergleichsweise hochgenau eingestellt werden. Beispielsweise kann mit kurzer Behandlungsdauer bei vergleichsweise niedriger Behandlungstemperatur eine vergleichsweise hohe Porosität hergestellt werden, wohingegen mit vergleichsweise längerer Behandlungsdauer und/oder bei höheren Sintertemperaturen eine eher niedrigere Porengröße, einhergehend mit höherer Festigkeit des Sinterkörpers, erzeugt werden kann. Die Porengröße und/oder die Porosität des Sinterkörpers kann zudem über die Korngröße und die Korngrößenverteilung des verwendeten Metallpulvers beeinflusst werden. Ein vergleichsweise homogenes Metallpulver mit vergleichsweise großer Korngröße resultiert vornehmlich in einem Sinterkörper mit vergleichsweise hoher Porosität und/oder Porengröße. Demgegenüber resultiert ein eher inhomogenes Ausgangspulver, in dem Partikel vergleichsweise kleiner Korngröße enthalten sind, eher in einem Sinterkörper mit kleinerer Porengröße und/oder geringerer Porosität.

Demgegenüber besonders bevorzugt wird aber ein Herstellungsverfahren, bei dem der Diffusionsbereich der Außenwand durch Metall-Pulverspritzgießen ("Metal Injection Molding", MIM) hergestellt wird. Bei diesem Verfahren wird ein Ausgangs-Metallpulver zunächst mit einem Binder versehen und dadurch für eine dem Spritzguss ähnliche Weiterverarbeitung geeignet gemacht. In einer Spritzguss-Anlage wird anschließend in einem geeigneten Werkzeug ein Werkstück durch Spritzgießen hergestellt, das bereits die endgültig gewünschte räumliche Geometrie aufweist und anschließend in einem chemisch/ thermischen Behandlungsschritt von den Resten des Binders befreit wird. Das verbleibende Metallpulver wird dabei in einem Sinterschritt bei einer Behandlungstemperatur von beispielsweise 1300 °C zu einem Festkörper gesintert.

In alternativer vorteilhafter Ausgestaltung kann für die Herstellung auch ein anderes geeignetes Verfahren, insbesondere ein 3D-Druckverfahren, aber auch Pressen, Sintern, pulvermetallurgische Verfahren, Spritzguss und/oder Rapid-Manufacturing vorgesehen sein. Bei einem porösen Speicherkörper können auch textiltechnologische Verfahren vorteilhaft sein.

Die Befüllung des Depots mit der den Wirkstoff enthaltenden Substanz kann auf unterschiedliche bevorzugte Weisen erfolgen (abhängig von der Bauweise des Behandlungsabutments), beispielsweise durch Füllen, vorzugsweise mit einer Spritze mit Durchstechen einer Membran und Einspritzung in die Depotkammer, durch Tunken, vorzugsweise durch gezielte Nutzung der Schwammwirkung eines porös gehaltenen Speicherkörpers, durch Tropfen, vorzugsweise durch gezielte Nutzung der Kapillarwirkung durch Auftropfen der Substanz auf die Oberfläche des Depots, insbesondere mittels einer Pipette, oder durch Einbringen eines Speichereinsatzes in die Depotkammer. In letzter Variante wird ein geeignet geformter, als eigentliches Behältnis für die den Wirkstoff enthaltende Substanz vorgesehener Speichereinsatz außerhalb der Mundhöhle des Patienten mit der Substanz befüllt und anschließend in die Depotkammer in der Art eines Pakets eingesetzt.

Die mit der Erfindung erzielten Vorteile bestehen insbesondere darin, dass durch die poröse Ausgestaltung der Außenwand des Grundkörpers im Diffusionsbereich eine kontrollierbare und dosierbare Abgabe der im Depot vorgehaltenen, den zu verabreichenden Wirkstoff enthaltenden Substanz auch über einen längeren Zeitraum hinweg ermöglicht wird. Gerade durch die Ausgestaltung des Diffusionsbereichs als poröser Körper ist dabei durch die geeignete Wahl der Porosität in Kombination mit den weiteren charakteristischen Parametern (z. B. Wanddicke) eine stetige und lang anhaltende Abgabe des Wirkstoffs möglich, ohne dass es zu einer Überflutung der Umgebung mit Wirkstoff einerseits oder einer Unterversorgung andererseits kommt. Die abgegebene Wirkstoffmenge kann somit zuverlässig innerhalb des therapeutisch erwünschten Dosierungsfensters gehalten werden, ohne dass eine allzu häufige Nachbefüllung des Depots notwendig wäre. Durch die Positionierung des Depots im Abutment (im Gegensatz beispielweise zum Pfostenteil) ist zudem einerseits erreicht, dass der (vorwiegend im Bereich der Seitenwände) vorgesehene Medikamenten- oder Wirkstoffaustritt konsequent im Mundbereich des Patienten stattfindet, so dass (im Gegensatz zu einem Wirkstoffdepot im Bereich des Pfostenteils) keine gesunde Knochensubstanz mit Wirkstoff beaufschlagt wird. Andererseits ist durch die Positionierung des Depots im Abutment ein erleichterter Austausch des Behandlungsabutments einschließlich des darin befindlichen Wirkstoffs ermöglicht, so dass durch Austausch der Behandlungsabutments beispielsweise im Rahmen des genannten Behandlungssystems abhängig vom gewünschten Therapieverlauf eine Anpassung der Dosierung, der lokalen Applizierung und/oder von Art oder Zusammensetzung der zu verabreichenden Substanz vorgenommen werden kann.

Das Behandlungsabutment ermöglicht somit eine besonders zielgerichtete und bedarfsgerechte Medikamentenabgabe, die auch über einen längeren Zeitraum mit sehr genauer Dosierung erfolgen kann. Es ist damit für sämtliche therapeutischen Ansätze und Behandlungen besonders geeignet, bei der eine Wirkstoffaufnahme für den Patienten über dessen Mundraum erfolgen kann oder soll. Gleichermaßen ist ein derartiges Behandlungsabutment aber auch für veterinärmedizinische Anwendungen besonders vorteilhaft und geeignet, bei denen einem Tier über längere Zeiträume hinweg und mit genauer Dosierbarkeit Medikamente oder Wirkstoffe zugeführt werden sollen.

Ein Ausführungsbeispiel der Erfindung wird anhand einer Zeichnung näher erläutert. Darin zeigen:
- FIG. 1: ein Dental-Implantatsystem im montierten Zustand,
- FIG. 2: eine Explosionsdarstellung des Dental-Implantatsystems nach FIG. 1, und
- FIG. 3,4: jeweils im Längsschnitt ein Behandlungsabutment zur Verwendung mit einem in den Kieferknochen eines Patienten eingebrachten Implantat-Teil des DentalImplantatsystems gem. FIG. 1.

Gleiche Teile sind in allen Figuren mit denselben Bezugszeichen versehen.

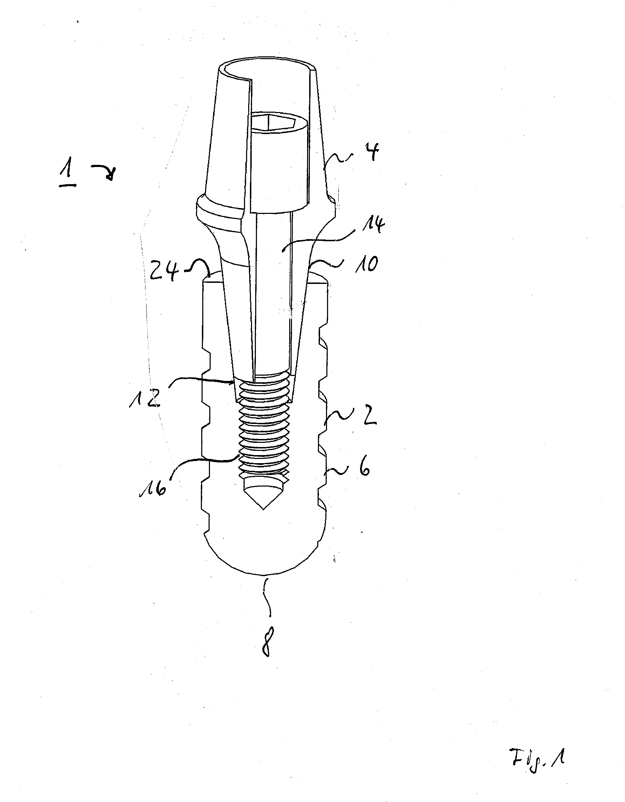

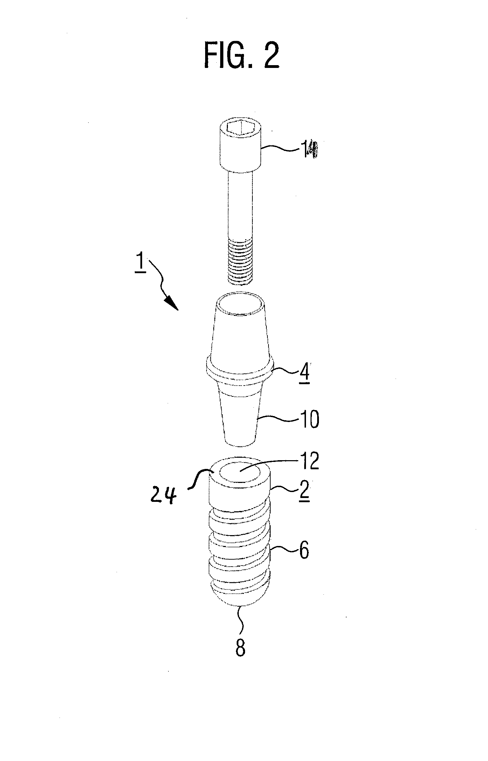

Das Dental-Implantatsystem 1, das in FIG. 1 in teilweise geschnittener Darstellung in montiertem Zustand und in FIG. 2 in Explosionsdarstellung gezeigt ist, ist zum Einsatz in den Kieferknochen anstelle eines extrahierten oder ausgefallenen Zahnes vorgesehen, um dort ein als Zahnersatz dienendes prothetisches Teil oder eine Krone zu halten. Das Dental-Implantatsystem 1 ist dabei mehrteilig ausgeführt und umfasst ein als so genanntes Pfostenteil ausgeführtes erstes Implantat-Teil 2 und ein diesem zugeordnetes, zur Anbringung eines Zahnersatzstücks vorgesehenes, auch als Aufbauteil oder Abutment bezeichnetes zweites Implantat-Teil 4. Das erste Implantat-Teil 2 oder Pfostenteil ist dabei außenseitig mit einem Außengewinde 6 versehen, das insbesondere am apikalen Ende 8 als selbstschneidendes Schraubengewinde ausgestaltet ist. Damit kann das erste Implantat-Teil 2 oder Pfostenteil durch Einschrauben an der vorgesehenen Stelle in den Kieferknochen eingesetzt werden.

Um nach geeigneter Anbringung des Zahnersatzstücks oder der Prothese am Aufbauteil oder zweiten Implantat-Teil 4 ein Einbringen in das Pfostenteil oder erste Implantat-Teil 2 bei hoher mechanischer Stabilität zu ermöglichen, ist an das zweite Implantat-Teil 4 ein Verbindungszapfen 10 angeformt, der in einen zugeordneten, im ersten Implantat-Teil 2 vorgesehenen Aufnahmekanal 12 einschiebbar ist. Durch das Einschieben des Verbindungszapfens 10 in den Aufnahmekanal 12 entsteht eine mechanische Verbindung der Implantat-Teile 2, 4 miteinander. Für eine hohe mechanische Stabilität ist dabei der Verbindungszapfen 10 in seiner Außenkontur an die Innenkontur des Aufnahmekanals 12 angepasst, wobei im Ausführungsbeispiel beide in Längsrichtung gesehen konisch geformt sind. Zudem kann in an sich bekannter Weise die Außenkontur des Verbindungszapfens 10 - und dementsprechend angepasst die Innenkontur des Aufnahmekanals 12-über die gesamte Länge des Aufnahmekanals oder auch lediglich in einem geeignet gewählten Indizierungsbereich im Querschnitt mit einer mehrzähligen, insbesondere sechszähligen, Symmetrie ausgestaltet sein, so dass beim Zusammenfügen der genannten Komponenten ein rotatorisches Gesperre entsteht und damit eine zuverlässige rotatorische Ausrichtung des Aufbauteils 4 relativ zum Pfostenteil 2 eingestellt werden kann.

Das Dental-Implantatsystem 1 ist im Ausführungsbeispiel für eine Schraubverbindung der Implantat-Teile 2, 4 miteinander ausgeführt. Dazu ist eine Verbindungsschraube 14 vorgesehen, die in ein innerhalb des ersten Implantat-Teils 2 vorgesehenes Schraubgewinde 16 eingreift. Hinsichtlich ihrer Materialwahl sind die Implantat-Teile 2, 4 geeignet an den Einsatzzweck angepasst und grundsätzlich aus einem geeignet gewählten Metall wie beispielsweise Titan oder auch aus keramischem Material wie beispielsweise Zirkonoxid oder Aluminiumoxid gefertigt.

Generell besteht bei Dental-Implantatsystemen, insbesondere auch bei zweiteiligen Implantatsystemen der vorstehend beschriebenen Art, das Problem, dass durch ein Eindringen von Bakterien oder Keimen in den Gewebebereich in der Nähe der Insertionsstelle, insbesondere im Bereich des in den Kiefer eingebrachten Außengewindes 6, Entzündungen oder Entzündungsherde entstehen können. Derartige, insbesondere auch in Folge einer so genannten Periimplantitis entstehende Entzündungen können, insbesondere wenn sie sich über einen längeren Zeitraum entwickeln und verfestigen können, zu einer gravierenden Beeinträchtigung des Gewebes und des Knochens im Bereich der Insertionsstelle führen. Ohne geeignete Gegenmaßnahmen können diese Beeinträchtigungen dazu führen, dass das gesamte Implantatsystem wieder aus dem Knochen entfernt und durch andere Prothetik ersetzt werden muss. Dieser durch die Periimplantitis hervorgerufene, äußerst unerwünschte Effekt kann somit zu einem Totalverlust des Implantatsystems führen, so dass erneute chirurgische Maßnahmen wie beispielsweise ein Ausschaben des betroffenen Bereichs im Kieferknochen und die Neuversorgung mit einem Implantatsystem notwendig werden können. Eine derartige durch Periimplantitis hervorgerufene Notwendigkeit einer Neuversorgung kann auch nach vergleichsweise langen Zeiträumen nach dem ersten Einsetzen des Implantatsystems von beispielsweise bis zu einigen Jahren auftreten.

Es besteht daher der dringende Wunsch nach geeigneten Gegenmaßnahmen, um für den Fall einer sich anbahnenden oder bereits aufgetretenen Periimplantitis unter Erhaltung des bereits eingesetzten Implantatsystems, also insbesondere des bereits inserierten Pfostenteils 2, wirksam den Entzündungsherd bekämpfen und die eingedrungenen Keime abtöten zu können. Darüber hinaus kann aber auch noch aus einer Vielzahl anderer Gründe die Zuführung von Medikamenten oder Wirkstoffen in den Mundbereich des Patienten wünschenswert oder notwendig sein.

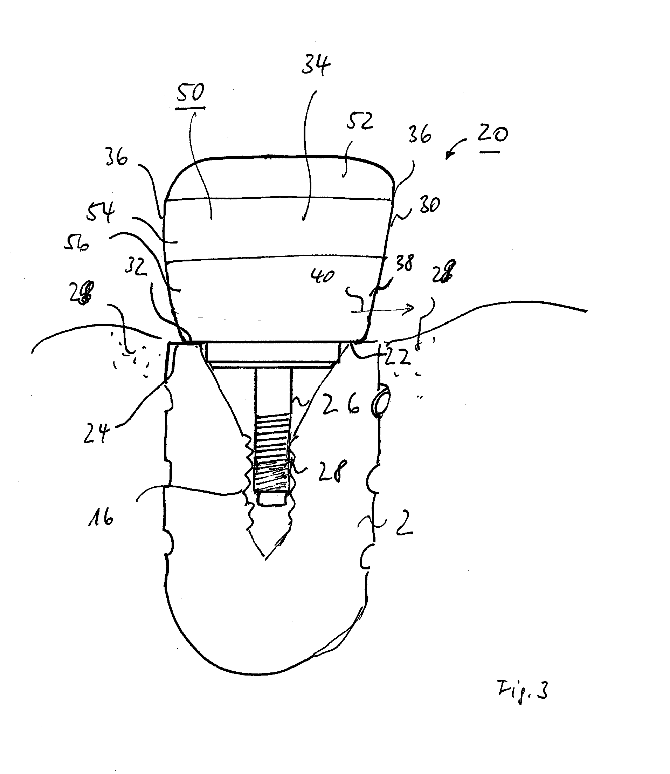

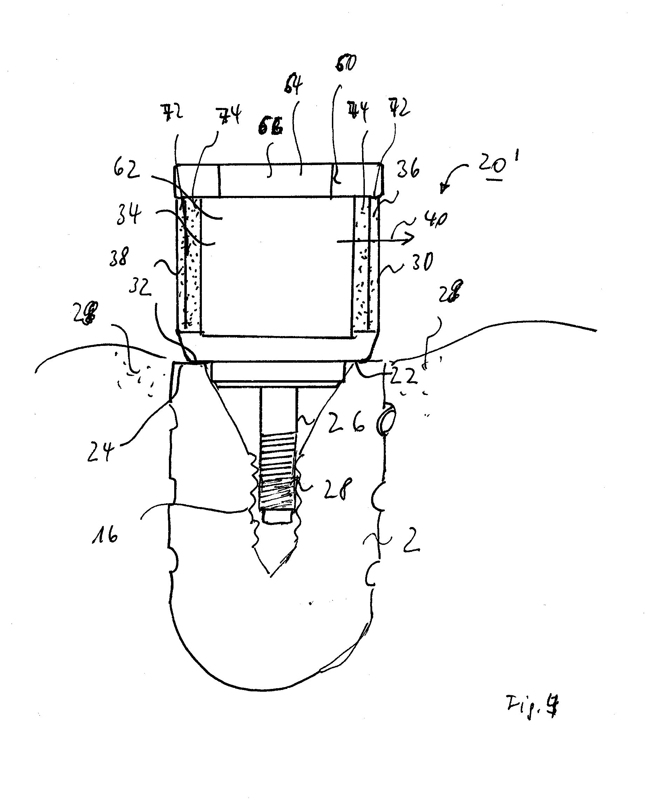

Zu diesem Zweck, also zum gezielten Abtöten von Keimen oder Bakterien im Insertionsbereich des Pfostenteils 2 und bedarfsweise auch zur Zuführung von Medikamenten oder anderen Wirkstoffen den Mundraum des Parienten und insbesondere in den Umgebungsbereich des inserierten Pfostenteils 2, ist ein Behandlungsaufbauteil, im Folgenden als Behandlungsabutment 20, 20' bezeichnet, vorgesehen, wie es im Längsschnitt in einer ersten Ausführungsform in FIG. 3 und in einer zweiten Ausführungsform in FIG. 4 gezeigt ist. Das Behandlungsabutment 20, 20' ist zur Verwendung mit dem in den Kieferknochen des Patienten eingebrachten ersten Implantat-Teil 2 oder Pfostenteil 2 des Dental-Implan-tatsystems 1 und somit im Ausführungsbeispiel zur Durchführung der genannten Behandlung für das dargestellte zweiteilig ausgeführte Implantatsystem 1 vorgesehen, wobei ein vorübergehendes Aufsetzen des Behandlungsabutments 20, 20' auf das Pfostenteil 2 anstelle des eigentlichen Abutments oder zweiten Implantat-Teils 4 erfolgen soll. Die nachfolgenden Ausführungen beziehen sich daher auf diesen Fall eines zweiteiligen Implantatsystems 1; selbstverständlich kann aber auch in analoger Ausgestaltung eine entsprechende Verwendung für einteilige Implantate vorgesehen sein; hierfür müsste lediglich die mechanische Verbindung des Behandlungsabutments 20, 20' mit dem auch während der Behandlung im Kieferknochen verbleibenden Teil des Implantatsystems 1 geeignet ausgestaltet sein, beispielsweise über eine geeignete Kontaktfläche, mit der das Behandlungsabutment 20, 20' anstelle der Prothetik auf das Abutment des Implantats aufgesetzt werden kann.

Bei der im Ausführungsbeispiel vorgesehenen zweiteiligen Ausführung des Implantatsystems 1 wird zur Durchführung der nachfolgend näher beschriebenen Behandlung zunächst - gegebenenfalls nach Entfernen der am eigentlichen Abutment oder zweiten Implantat-Teil 4 angebrachten Prothetik - die Schraubverbindung zwischen erstem und zweitem Implantat-Teil 2, 4 gelöst und das zweite Implantat-Teil 4 abgenommen. Das erste Implantat-Teil oder Pfostenteil 2 verbleibt dabei im Kieferknochen. Anschließend wird das Behandlungsabutment 20, 20' anstelle des eigentlichen Abutments 4 auf das Pfostenteil 2 aufgesetzt und über die Schraubverbindung mit diesem verbunden. Das Behandlungsabutment 20, 20' weist dazu eine im Wesentlichen plane Kontaktfläche 22 auf, mit der es auf die Stirnkante 24 des Pfostenteils 2 aufgesetzt werden kann. Zur mechanischen Verbindung mit korrespondierenden Verbindungselementen des Implantat-Teils oder Pfostenteils 2, nämlich im Ausführungsbeispiel dem als Innengewinde des Pfostenteils ausgestalteten Schraubgewinde 16, weist das Behandlungsabutment 20, 20' zudem als an diese angepasstes Verbindungssystem einen Verbindungszapfen 26 auf, der ein an das Schraubgewinde 16 angepasstes Außengewinde 28 trägt. Durch Einschrauben des Außengewindes 28 in das Schraubgewinde 16 kann das Behandlungsabutment 20, 20' somit mechanisch fest mit dem Pfostenteil 2 verbunden werden. Selbstverständlich sind auch andere Varianten einer derartigen Verbindung denkbar, beispielsweise über eine separate Verbindungsschraube, durch Zwischenschaltung von Zwischen- oder Überbrückungsstücken oder auch durch Herstellen einer stoffschlüssigen Verbindung wie beispielsweise Kleben. Der Verbindungs- oder Verankerungsbereich des Behandlungsabutments 20, 20' ist somit als grundsätzliches Auslegungskonzept passend zum Pfostenteil 2 oder eigentlichen Implantat gestaltet, damit eine sichere, mechanisch belastbare, aber lösbare Verbindung zwischen dem Implantat oder Pfostenteil 2 und dem Behandlungsabutment 20, 20' entsteht. Bedarfsweise kann der Verbindungszapfen 26 dabei auch ganz oder teilweise konisch, teilweise zylindrisch oder mit Indizierung ausgeführt sein.

Das Behandlungsabutment 20, 20' ist dafür ausgestaltet, die im Insertionsbereich des Pfostenteils 2 vorhandenen Keime oder Bakterien durch gezielte und dosierte, bedarfsweise auch über einen längeren Zeitraum aufrecht erhaltene Zuführung eines bakterioziden, aber für den menschlichen Organismus verträglichen Desinfektionsmittels abzutöten. Dazu ist das Behandlungsabutment 20, 20' strukturell und auch funktional/konzeptionell dafür ausgelegt, eine Behandlungsflüssigkeit oder eine andere geeignete, den bakteriziden Wirkstoff enthaltende Substanz zum Abtöten der Keime oder Bakterien in den Insertionsbereich des Pfostenteils 2, insbesondere den Bereich von dessen Außengewinde 6, abzugeben.

Im Hinblick auf diese Auslegungsziele weist das Behandlungsabutment 20, 20' einen konstruktiven Aufbau auf, wie er der Darstellung im Längsschnitt gem. FIG. 3 bzw. FIG, 4 entnehmbar ist. Dort ist das Behandlungsabutment 20, 20' jeweils im auf das Pfostenteil 2 aufmontierten Zustand dargestellt. Ebenfalls dargestellt ist dabei ein das Pfostenteil 2 im Bereich seines Außengewindes 6 ringförmig umgebender Raumbereich 29 im Kieferknochen, der von Periimplantitis befallen und dementsprechend mit Bakterien belastet ist.

Das Behandlungsabutment 20, 20' weist einen im Wesentlichen als Zylindermantelkörper ausgeführten Grundkörper 30 auf, der mit seiner die Kontaktfläche 22 bildenden Stirnfläche 32 auf die obere Stirnfläche oder-kante 24 des Pfostenteils 2 aufgesetzt ist. Innerhalb des Grundkörpers 30 ist ein Depot 34 für eine einen zu verabreichenden Wirkstoff enthaltende Substanz angeordnet. Die das Depot 34 umschließende Außenwand 36 des Grundkörpers 30 ist in einem Diffusionsbereich 38 porös ausgeführt, so dass auf Grund der Porosität - wie durch den Pfeil 40 angedeutet - die im Depot 34 vorgehaltene, mit dem zu verabreichenden Wirkstoff versetzte Substanz durch den Diffusionsbereich 38 hindurch vom Depot 34 in die äußere Umgebung des Behandlungsabutments 20, 20', also im Ausführungsbeispiel in den Mundbereich des Patienten, gelangen kann.

Durch die Ausgestaltung der wesentlichen Auslegungsparameter des Behandlungsabutments 20, 20', also insbesondere die Porosität der Außenwand 36 im Diffusionsbereich 38, die Porengröße in diesem Bereich und/oder die genaue Positionierung des Diffusionsbereichs 38 in Relation zur Außenwand 36 insgesamt, kann der Durchtritt der den zu verabreichenden Wirkstoff enthaltenen Substanz durch die Außenwand 36 vergleichsweise genau und bedarfsgerecht eingestellt werden. Insbesondere ist, gerade im Hinblick auf die Einzelheiten der wirkstoffenthaltenen Substanz wie beispielsweise Partikelgröße oder Viskosität, die Austrittsrate der Substanz vom Depot 34 in den Außenbereich des Behandlungsabutments 20, 20' einstellbar, so dass durch geeignete Wahl der Porosität und Porengröße über längere Zeiträume hinweg eine vergleichsweise genaue Dosierung der aus dem Behandlungsabutment 20, 20' austretenden Substanz eingestellt werden kann.

Zur Bildung des Depots 34 sind zwei besonders bevorzugte Varianten vorgesehen, die in den FIG. 3 bzw. 4 dargestellt sind. In der Ausführungsform gem. FIG. 3 des Behandlungsabutments 20 umfasst das Depot 34 einen porös ausgeführten Speicherkörper 50 für die den Wirkstoff enthaltende Substanz. Der Speicherkörper 50 dient dabei der Wirkungsweise eines Schwamms vergleichbar zur vorübergehenden Einlagerung der den Wirkstoff enthaltenden Substanz. Er erstreckt sich im Ausführungsbeispiel räumlich bis hin zur Außenwand 36 des Grundkörpers 30; die vorstehend beschriebene, porös ausgeführte Außenwand 36 ist somit im dargestellten Beispiel Teil des Speicherkörpers 50, so dass dieser auch den den Diffusionsbereich 38 bildenden Teil der Außenwand 36 des Grundkörpers 30 direkt mit umfasst.

In der dargestellten Ausführungsform umfasst der Speicherkörper 50 eine Mehrzahl von Speichersegmenten 52, 54, 56, die räumlich abgegrenzt voneinander in der Art von gestapelten Schichten angeordnet und mit im Vergleich zueinander unterschiedlichen Porositäten ausgestaltet sind. Die erste Schicht oder das erste Speichersegment ist dabei im montierten Zustand des Behandlungsabutments 20 von außen zugänglich (oben angeordnet) und bildet eine Aufnahmezone zum Einbringen oder Einlagern des Wirkstoffs in den Speicherkörper 50, beispielsweise durch Auftropfen einer Flüssigkeit. Die zweite Schicht oder das zweite Speichersegment 54 dient hingegen als Speicherzone, in der der Wirkstoff aufgrund der Porosität vorgehalten werden kann. Aufgrund dieser Funktionalität ist das Speichersegment 54 nicht zur Abgabe des Wirkstoffs an die Umgebung ausgelegt; vorliegend wird dies durch eine ausreichend kleinporige oder nicht poröse äußere Oberfläche des Speichersegments 54 erreicht. Die Abgabe des Wirkstoffs soll hingegen über das als Abgabezone vorgesehene dritte Speichersegment 56 erfolgen, das in seinem Außenbereich mit dem als Diffusionsbereich 38 vorgesehenen Teil der Außenwand 36 des Grundkörpers 30 versehen ist.

Im dargestellten Ausführungsbeispiel ist somit der Speicherkörper 50 und mit diesem die Außenwand 36 des Grundkörpers 30 axial von apikal nach distal gesehen in eine Mehrzahl von aufeinanderfolgenden Schichten jeweils unterschiedlicher Porosität unterteilt.

Im Ausführungsbeispiel gem. FIG. 4 ist die andere bevorzugte Variante des Behandlungsabutments 20' gezeigt, bei der das Depot 34 in der Art eines für die vorübergehende Aufnahme der den Wirkstoff enthaltende Substanz ausgelegten Behältnisses ausgeführt ist. Dazu umfasst das Depot 34 in dieser Ausführungsform eine mit einem Deckelelement 60 verschließbare Depotkammer 62. Das Deckelelement 60, das in an sich gängiger Weise an der oberen Kante der Außenwand 36 fixiert ist (beispielsweise durch Verschrauben oder Verkleben), weist in seinem zentralen Bereich 64 einen Applizierungsbereich 66 auf, in dem es aus einem vergleichsweise weichen und elastischen Kunststoff- im Ausführungsbeispiel Viton - besteht. Durch diese Ausgestaltung ist erreicht, dass bei ausreichender Dichtigkeit gegenüber der in der Depotkammer 62 enthaltenen Substanz auf besonders einfache Weise ein Nachbefüllen der Depotkammer 62 durch Einstechen einer Injektionsnadel oder Kanüle durch den Applikationsbereich 66 des Deckelelements 60 hindurch ermöglicht ist.

Das Behandlungsabutment 20' ist im Übrigen hinsichtlich der Dimensionierung seiner Komponenten derart ausgelegt, dass die Depotkammer 34 ein freies Innenvolumen von etwa 15 µl aufweist.

Zudem ist im Ausführungsbeispiel gem. FIG. 4 ein Auslegungsfall gezeigt, bei dem der Diffusionsbereich 38 in Längsrichtung des Behandlungsabutments 20' gesehen nahezu die gesamte Länge der Außenwand 36 und bzgl. der Längsachse des Behandlungsabutments 20' gesehen diese vollständig umlaufend ausgebildet ist. Alternativ kann durch andere Positionierung des Diffusionsbereichs 38, beispielsweise in Längsrichtung des Behandlungsabutments 20' gesehen oder auch durch lediglich teilweise Positionierung in Umfangsrichtung gesehen, der Ort des Austritts der Substanz in den Umgebungsbereich um das Behandlungsabutment 20 herum und damit die lokale Applikation der Substanz im Mundraum des Patienten vergleichsweise genau eingestellt werden.

Durch die Ausgestaltung des Behandlungsabutments 20, 20' ist in beiden Varianten insbesondere erreicht, dass auf vergleichsweise einfache Art und Weise eine zuverlässige Zuführung von Medikamenten und Wirkstoffen in den lokalen Umgebungsbereich des inserierten Pfostenteils 2 erfolgen kann. Insbesondere kann hierzu ohne weitere Eingriffe auf das inserierte Pfostenteil 2 zurückgegriffen werden, so dass die lokale Bereitstellung des Medikaments oder Wirkstoffs ohne weitere chirurgische Eingriffe am Patienten ermöglicht ist. Durch die Ausgestaltung des Behandlungsabutments 20, 20' kann zudem in der Art eines Behandlungssystems auch ein Austausch gegen andersartig ausgeführte Behandlungsabutments 20, 20' erfolgen, so dass beispielsweise im Rahmen einer längerfristig angelegten Therapie unterschiedliche Behandlungsstufen mit unterschiedlicher Dosierung der Medikamentenzuführung und/oder unterschiedlicher Positionierung innerhalb des Mundraums vorgenommen werden können. Hierzu sind das Behandlungsabutment 20, 20' und weitere Behandlungsabutments 20, 20' in dem Sinne gemeinsam einem Pfostenteil 2 zugeordnet, dass die für die Verbindung mit dem Pfostenteil 2 vorgesehenen Verbindungselemente (Kontaktstift 26, Schraubgewinde 28) einheitlich ausgeführt sind, so dass die Behandlungsabutments 20, 20' ohne weitere Bearbeitung gegeneinander austauschbar sind. Die Behandlungsabutments 20, 20' sind im Vergleich zueinander mit jeweils unterschiedlichen Porositäten und gegebenenfalls mit unterschiedlicher lokaler Positionierung des Diffusionsbereichs 38 versehen, so dass die Dosierung und/oder lokale Applizierung der das Medikament enthaltenden Substanz durch einfachen Austausch der Behandlungsabutments 20, 20' variiert und an den Therapieverlauf angepasst werden können.

Im Hinblick auf den im Ausführungsbeispiel angestrebten Behandlungserfolg ist für den Diffusionsbereich 38 eine Porengröße im Bereich von 0,01 µm bis etwa 1 µm, bevorzugt mit einem Maximalwert in der Größenverteilung bei etwa 0,2 µm, vorgesehen.

Zusätzlich weist das Behandlungsabutment 20, 20' im Diffusionsbereich 38 in Durchtrittsrichtung der Substanz (also parallel zum Pfeil 40 gesehen) eine Mehrzahl von aufeinander folgenden Schichten 72, 74 auf. Die weiter innen liegende Schicht 72 weist dabei im Vergleich zur weiter außen liegenden Schicht 74 bei geringerer Dicke eine geringere Porengröße und eine insgesamt geringere Porosität auf. Hinsichtlich der Durchströmung der Substanz dient die Schicht 72 somit in der Art einer Bestimmungsschicht dazu, die Partikelgröße der in der Substanz mitgeführten, durch die Außenwand 36 von der Depotkammer 62 nach außen getragenen Partikel zu begrenzen. Um dabei dennoch eine vergleichsweise erleichterte Durchströmung im Sinne einer Begünstigung der Diffusion zu gewährleisten, ist die als Bestimmungsschicht vorgesehene Schicht 72 vergleichsweise dünnwandig ausgeführt und wird nach außen hin durch die im Ausführungsbeispiel als Stützschicht vorgesehene weitere Schicht 74 ergänzt. Diese dient als zusätzliche Stützwand für die Außenwand 36, ohne dass sie auf Grund ihrer vergleichsweise größeren Porosität und Porengröße die Diffusion der Substanz durch die Diffusionsschicht 38 nennenswert behindern würde.

Der Grundkörper 30 und insbesondere dessen im Diffusionsbereich 38 porös ausgeführte Außenwand 36 können aus Keramik - unter Rückgriff auf die diesbezüglichen geeigneten Herstellungsverfahren zur Bereitstellung eines porösen Grundkörpers - ausgeführt sein. Im Ausführungsbeispiel ist aber eine Ausführung aus Metall, nämlich eine Titan-Legierung Ti₆Al₄V, vorgesehen. Insbesondere im porös ausgeführten Diffusionsbereich 38 erfolgt die Herstellung des Grundkörpers 30 dabei unter Rückgriff auf das Verfahren des Metall-Pulver-Spritzgießens ("Metal Injection Molding", MIM). Dabei wird ein insbesondere hinsichtlich seiner Korngröße und Korngrößenverteilung geeignet gewähltes Metallpulver zunächst mit einem Binder versetzt, der es in einem Spritzgießverfahren verarbeitbar macht. Die so vorbereitete Masse wird anschließend in einer Spritzgussmaschine in ein Werkzeug gegossen, so dass durch das Spritzgießen die gewünschte Grundform des eigentlichen Werkstücks, also des Grundkörpers 30 entsteht. Anschließend wird der Binder wieder entfernt, und der entstehende Körper wird einem Sinterungsprozess unterzogen.

### Bezugszeichenliste

- 1: Dental-Implantatsystem
- 2: Pfostenteil / Implantat-Teil
- 4: Abutment / Implantat-Teil
- 6: Außengewinde
- 8: apikales Ende
- 10: Verbindungszapfen
- 12: Aufnahmekanal
- 14: Verbindungsschraube
- 16: Schraubgewinde
- 20, 20': Behandlungsabutment
- 22: Kontaktfläche
- 24: Stirnfläche oder -kante
- 26: Kontaktstift / Verbindungszapfen
- 28: Außengewinde
- 30: Grundkörper
- 32: Stirnfläche
- 34: Depotkammer
- 36: Außenwand
- 38: Diffusionsbereich
- 40: Pfeil
- 50: Speicherkörper
- 52, 54, 56: Speichersegment
- 60: Deckelelement
- 62: Depotkammer
- 64: zentraler Bereich des Deckelelements 60
- 66: Applizierungsbereich
- 72, 74: Schichten

## Patentansprüche

1. Behandlungsabutment (20, 20'), insbesondere zur Verwendung mit einem in den Kieferknochen eines Patienten eingebrachten Implantat-Teil (2) eines Dental-Implantatsystems (1), mit einem Grundkörper (30), der zur mechanischen Verbindung mit korrespondierenden Verbindungselementen des Implantat-Teils (2) ein an diese angepasstes Verbindungssystem und ein Depot (34) für eine einen zu verabreichenden Wirkstoff enthaltende Substanz aufweist, wobei eine dem Depot (34) zugeordnete Außenwand (36) des Grundkörpers (30) in einem Diffusionsbereich (38) porös ausgeführt ist.

2. Behandlungsabutment (20, 20') nach Anspruch 1, bei dem die Außenwand (36) des Grundkörpers (30) im Diffusionsbereich (38) eine mittlere Porengröße von 0,01 µm bis 1 µm, bevorzugt von etwa 0,2 µm, aufweist.

3. Behandlungsabutment (20, 20') nach Anspruch 1 oder 2, bei dem die Außenwand (36) des Grundkörpers (30) im Diffusionsbereich (38) eine gerichtete Porenform aufweist.

4. Behandlungsabutment (20, 20') nach einem der Ansprüche 1 bis 3, bei dem die Außenwand (36) des Grundkörpers (30) im Diffusionsbereich (38) von innen nach außen gesehen eine Mehrzahl von aufeinanderfolgenden Schichten (72, 74) jeweils unterschiedlicher Porosität aufweist.

5. Behandlungsabutment (20) nach einem der Ansprüche 1 bis 4, dessen Depot (34) einen porös ausgeführten Speicherkörper (50) für die den Wirkstoff enthaltende Substanz umfasst.

6. Behandlungsabutment (20) nach Anspruch 5, deren Speicherkörper (50) eine Mehrzahl von Speichersegmenten (52, 54, 56) mit im Vergleich zueinander unterschiedlichen Porositäten umfasst.

7. Behandlungsabutment (20, 20') nach Anspruch 5 oder 6, bei dem der Speicherkörper (50) und/oder die Außenwand (36) des Grundkörpers (30) im Diffusionsbereich (38) axial von apikal nach distal gesehen eine Mehrzahl von aufeinanderfolgenden Schichten jeweils unterschiedlicher Porosität aufweist.

8. Behandlungsabutment (20, 20') nach einem der Ansprüche 1 bis 7, bei dem der Speicherkörper (50) und/oder die Außenwand (36) des Grundkörpers (30) im Diffusionsbereich (38) aus einem porösen Material der Gruppe der Metalle, vorzugsweise einer Titanlegierung, der Gruppe der Keramiken, vorzugsweise einer Zirkonkeramik, der Gruppe der Kunststoffe, vorzugsweise PEEK, oder der Gruppe der Textilien hergestellt ist.

9. Behandlungsabutment (20') nach einem der Ansprüche 1 bis 8, dessen Depot (34) eine mit einem Deckelelement (60) verschließbare Depotkammer (62) umfasst.

10. Behandlungsabutment (20') nach Anspruch 9, dessen zum Verschließen der Depotkammer (62) vorgesehenes Deckelelement (60) in einem Applizierungsbereich (66) aus einem Material mit einer ShoreD-Härte im Bereich von 10 bis 80, bevorzugt 25 bis 50, und/oder einer Reißfestigkeit von mehr als 10 N/mm² gebildet ist.

11. Behandlungsabutment (20') nach Anspruch 9 oder 10, dessen Depotkammer (62) ein lichtes Innenvolumen von 5 bis 50 µl, vorzugsweise von etwa 15 µl, aufweist.

12. Behandlungssystem zur oralen Applikation von zu verabreichenden Wirkstoff enthaltenden Substanzen, mit einer Mehrzahl von einem gemeinsamen in den Kieferknochen eines Patienten inserierten Implantat-Teils (2) eines Dental-Implantatsystems (1) zugeordneten Behandlungsabutments (20, 20') nach einem der Ansprüche 1 bis 11, die sich hinsichtlich der Positionierung ihrer Depots (34), der Porosität ihrer Außenwand (36) im Diffusionsbereich (38) und/oder der Porengröße ihrer Außenwand (36) im Diffusionsbereich (38) voneinander unterscheiden.

13. Verfahren zur Herstellung eines Behandlungsabutments (20, 20') nach einem der Ansprüche 1 bis 11, bei dem der Diffusionsbereich (38) der Außenwand (36) durch Metall-Pulverspritzgießen ("Metal Injection Molding", MIM) hergestellt wird.

14. Verfahren zur Herstellung eines Behandlungsabutments (20, 20') nach einem der Ansprüche 1 bis 11, bei dem der Diffusionsbereich (38) der Außenwand (36) durch ein 3D-Druckverfahren hergestellt wird.
